Europäisches Patentamt

European Patent Office

Office européen des brevets

(19)

(11) Numéro de publication: **0 605 027 A1**

(12) **DEMANDE DE BREVET EUROPEEN**

(21) Numéro de dépôt: **93203285.7**

(22) Date de dépôt: **24.11.93**

(51) Int. Cl.5: **G06F 15/70**, G01S 3/786, B64G 1/36, G06F 15/353

(30) Priorité: **27.11.92 FR 9214289**

(43) Date de publication de la demande:
**06.07.94 Bulletin 94/27**

(84) Etats contractants désignés:
**DE FR GB IT**

(71) Demandeur: **LABORATOIRES D'ELECTRONIOUE PHILIPS
22, Avenue Descartes
F-94450 Limeil-Brévannes(FR)**

(84) **FR**

(71) Demandeur: **PHILIPS ELECTRONICS N.V.
Groenewoudseweg 1
NL-5621 BA Eindhoven(NL)**

(84) **DE GB IT**

(72) Inventeur: **Florent, Raoul
Société Civil S.P.I.D.,
156, Boulevard Haussmann
F-75008 Paris(FR)**

(74) Mandataire: **Lottin, Claudine et al
Société Civile S.P.I.D.
156, Boulevard Haussmann
F-75008 Paris (FR)**

(54) **Dispositif de traitement d'image pour estimer les paramètres d'une ellipse et identifier son centre.**

(57) Dispositif de traitement d'image en temps réel, pour déterminer le demi-grand axe dit rayon Ro, l'ellipticité Eo et la position du centre Oo d'une ellipse représentée par une distribution discrétisée (100) de points Mk, ce dispositif comprenant au moins :
- des moyens (2,3) pour générer des couples (r,e) de valeurs de recherche respectivement dudit rayon et de l'ellipticité, et, pour chacun de ces couples (r,e) généré :
- des moyens (8) pour fournir une distribution circularisée (110) de points mk obtenus par l'application, sur chaque point Mk, d'une homothétie $\vec{H}$ définie par :
  . son centre $\Omega$, fixé au centre de l'ellipse (100) supposé connu de manière approximative par une hypothèse A PRIORI ;
  . son axe parallèle au petit axe de l'ellipse (100) ;
  . son rapport, égal à la valeur e de l'ellipticité ;
- des moyens (1, 2, 3) pour calculer, par rapport au centre approximatif $\Omega$, la position actualisée du centre Ore de la distribution circularisée (110), et des moyens (9) pour calculer la distance Dk qui sépare chaque point mk de ce centre actualisé Ore ;
- et des moyens (4, 5, 11) pour sélectionner, parmi les couples (r,e), le couple (Ro,Eo) qui minimise l'énergie d'erreur Err (r,e), calculée A POSTERIORI, entre cette distance Dk calculée, et chaque valeur générée du rayon r du couple (r,e).

Application : Senseurs de Terre pour télécommunications

EP 0 605 027 A1

FIG.4

L'invention concerne un dispositif de traitement d'image en temps réel, pour déterminer la valeur du demi-grand axe dit rayon Ro, la valeur de l'ellipticité Eo et la position du centre Oo d'une ellipse dont l'image est représentée, dans un espace plan discrétisé, par un ensemble (non vide) de points Mk.

Un tel dispositif est généralement désigné par l'homme du métier comme un "identificateur" ou un "estimateur".

L'invention concerne particulièrement un senseur de Terre, pour être embarqué sur un engin spatial, comprenant un extracteur pour l'extraction du contour du disque terrestre vu de l'engin, un identificateur du centre du disque terrestre et des moyens d'orientation de l'engin spatial par rapport à l'axe engin-centre de la Terre.

L'invention trouve son application dans le domaine des télécommunications, pour réaliser des senseurs de Terre capables d'orienter des satellites artificiels par rapport à l'axe satellite-centre de la Terre, dans le but de viser des antennes d'émission-réception, et d'améliorer ainsi la transmission d'informations qui transitent d'une région à une autre de la Terre, via ces satellites artificiels.

Un senseur d'horizon terrestre est déjà connu du brevet européen EP 405 678 A1. Ce dispositif connu utilise des éléments photosensibles à transfert de charges (CCD) pour détecter les transitions entre la Terre et l'Espace sur une image. Il met en oeuvre, dans le domaine allant du proche infra-rouge à l'ultraviolet (visible), le rayonnement solaire diffusé par l'atmosphère terrestre. Le dispositif connu permet la détermination du centre de la Terre. A cet effet, les éléments photosensibles à transfert de charges sont constitués en une matrice bidimensionnelle de détecteurs élémentaires. Des moyens de lecture déterminent les coordonnées des détecteurs élémentaires situés aux transitions Terre-Espace, puis des moyens de calcul déduisent la position du centre de la Terre dans le référentiel de la matrice.

Ainsi, à l'aide d'une optique de focalisation connue en soi, on forme une image de la Terre, ou de son halo, sur une matrice d'éléments photosensibles à transfert de charge (CCD) composée d'un très grand nombre de détecteurs élémentaires disposés selon un arrangement régulier de lignes et de colonnes. La matrice est lue ligne par ligne.

Les signaux provenant du registre de sortie de la matrice sont analysés par un circuit de comparaison comprenant deux seuils. Le circuit de comparaison ne retient les coordonnées d'un élément photosensible donné que si le signal correspondant est compris entre les deux seuils, ce qui permet de détecter les transitions entre l'Espace et la Terre, et donc d'obtenir le contour de la Terre au moyen de ces seuillages.

Après avoir été stockées en mémoire, les coordonnées des points de transition Terre-Espace sont traitées par une méthode de moindres carrés des coordonnées du centre du cercle passant au mieux par ces points de transition.

L'orientation des satellites artificiels est un problème important car ces satellites sont destinés à recevoir et à transmettre des signaux terrestres. Il faut donc qu'ils puissent viser les antennes terrestres avec une grande précision. Meilleure sera la précision, plus puissante sera la réception par les antennes terrestres.

On cherche à atteindre, au moyen du dispositif selon l'invention, une précision de 1 à quelques kilomètres au sol. En matière de précision, cette spécification s'évalue en degrés. Un but de l'invention est de fournir un senseur de Terre capable de déterminer le centre de la Terre à quelques centièmes de degré près, par exemple 1 à 5 centième de degré, afin d'obtenir la position de l'axe satellite-centre de la Terre avec cette même précision.

Une autre spécification relative au senseur de Terre concerne la fréquence ou autrement dit la cadence à laquelle le senseur peut fournir les mesures relatives aux coordonnées du centre de la Terre. Donc, un autre but de l'invention est de fournir un senseur de Terre capable de fournir des mesures relatives aux coordonnées du centre de la Terre à intervalles de temps réguliers et rapprochés.

Une autre spécification concerne la réalisation matérielle du senseur de Terre. Ce dispositif doit pouvoir être réalisé au moyen d'éléments physiques appropriés à être satellisés, c'est-à-dire peu encombrants et très fiables.

Une autre spécification relative au senseur de Terre concerne le domaine de longueurs d'onde dans lequel le senseur d'horizon doit travailler. Le senseur d'horizon connu de l'état de la technique inclut une matrice d'éléments photosensibles à transfert de charges qui travaille dans le visible. Cet agencement présente un avantage sur un éventuel dispositif qui travaillerait dans l'infrarouge. En effet, dans le domaine des longueurs d'onde infrarouges, l'homme du métier ne sait pas à ce jour réaliser de matrices, mais seulement des senseurs à 1, ou quelques pixels, auxquels on adjoint des moyens mécaniques pour que le ou les pixel(s) balaye(nt) la totalité de l'image à étudier. Ces moyens mécaniques pour réaliser le balayage d'une image par un senseur à 1 pixel ou quelques pixels sont extrordinairement lourds et compliqués, donc peu favorables à une satellisation. Un autre but de l'invention est donc de fournir un senseur de Terre travaillant dans le domaine des longueurs d'onde visibles avec des matrices d'éléments photosensibles, par

EP 0 605 027 A1

exemple du type à transfert de charges.

En résumé, le senseur de Terre selon l'invention doit répondre aux spécifications posées de précision, de cadence, et de compacité et fiabilité du matériel.

Dans le cas des spécifications générales exposées ci-dessus, la présente invention se propose de résoudre plus particulièrement le problème de la détermination du centre de la Terre - ou identification - dans la phase dite de poursuite (en anglais : TRACKING) où le senseur connaît déjà les coordonnées du centre de la Terre relatives à l'image précédente. Dans cette phase de poursuite, la tâche du senseur de Terre est de recalculer les coordonnées du centre de la Terre pour chacune des images suivantes successives. Les conditions sont telles que ces coordonnées évoluent en fait peu d'une image à la suivante, et que pour une image donnée, les coordonnées initiales sont connues avec une assez bonne précision.

Dans le cadre de ce problème particulier, on suppose que le cercle, dont on veut identifier le centre, est déformé selon une ellipse dont on ne connaît pas la grandeur des axes principaux et donc l'ellipticité, c'est-à-dire relativement à laquelle on ne connaît pas le rapport du petit axe sur le grand axe. On supposera cependant que les axes de l'ellipse sont parallèles aux axes qui définissent un plan de référence, c'est-à-dire peuvent être représentés parallèlement aux directions horizontale et verticale respectivement, le plan de référence choisi étant celui dans lequel l'extracteur forme l'image de la périphérie de la Terre, c'est-à-dire l'image des points distribués le long d'une ellipse.

Pour l'application à la détermination du centre de la Terre, il est vrai que l'homme du métier connaît les rayons terrestres, c'est-à-dire le rayon équatorial et le rayon polaire, avec une bonne précision. Mais vue d'un engin spatial, par exemple un Satellite géostationnaire, du fait des variations d'éclairement, la Terre montre des rayons qui évoluent en fonction de l'heure de la journée, et du jour de l'année. Sur le cours d'une année entière, pour une date donnée, et à une heure donnée, ces rayons reprennent la même valeur. Cependant, jusqu'à ce jour, on ne connaît pas ces valeurs. Pour connaître ces valeurs, il faudrait envoyer dans l'espace une mission spéciale capable de mesurer ces rayons et d'établir des Tables de Valeurs des rayons en fonction de l'heure et du jour dans l'année. Mais une telle mission serait très onéreuse, et on cherche à l'éviter. De plus, les valeurs relevées ne pourraient ensuite être utilisées que dans un senseur de Terre qui aurait à la fois le même dispositif de formation de l'image du disque terrestre (CCD) et le même extracteur du contour de Terre, que le dispositif de la mission spéciale. Ces Tables de Valeurs auraient donc un usage et une utilité très limités. Par ailleurs, ces rayons ne sont pas non plus mathématiquement prédictibles, car les modèles d'atmosphère dont ils dépendent en fonction de l'heure et du jour de l'année sont variables selon des lois trop compliquées pour être actuellement utilisables.

C'est pourquoi la présente invention a pour but de fournir un estimateur complet capable de calculer l'ellipticité de la Terre, la dimension de son demi-grand axe, et les coordonnées du centre de la Terre, en fonction de l'heure et de la date, c'est-à-dire en fonction des coordonnées des points bruités de la périphérie que, par exemple le dispositif connu de l'état de la technique, peut mesurer.

En outre, un but de l'invention est de fournir un tel estimateur capable de réaliser ces calculs avec une très grande précision. Ainsi, en moyenne, sachant que l'ellipticité de la Terre est de l'ordre de 3/1000, la précision recherchée sera de 1/10 de pixel sur le centre, avec un rayon de l'ordre de 100 pixels dans l'image de la distribution elliptique étudiée, et sera de 1/1000 de pixel sur l'ellipticité, avec une ellipticité proche de 1.

D'après le document cité plus haut, il est déjà connu d'estimer le centre de la Terre par la méthode des moindres carres.

Mais, cette méthode connue s'applique à l'estimation du centre d'un cercle parfait. Cette méthode utilise simplement les coordonnées de points situés à la périphérie du cercle parfait étudié, et fournit à la fois la valeur du rayon, et les coordonnées du centre du cercle.

Pour arriver aux buts de l'invention, on supposera connus de l'homme du métier :
- des moyens de traitement d'image du type "extracteur" pour fournir, à partir d'une image du disque terrestre, un contour du disque terrestre, sous la forme de points discrets distribués de manière bruitée selon une ellipse de faible ellipticité, et pour fournir les coordonnées de ces points discrets repérées dans un plan dit plan de référence ;
- des moyens de traitement d'image du type "identificateur ou estimateur" pour déterminer les coordonnées actualisées du centre d'un cercle idéal qui est défini par les coordonnées de points discrets distribués à sa périphérie, repérées dans un plan de référence, lorsque l'on connaît aussi une valeur approximative du rayon de ce cercle, et une valeur approximative des coordonnées de son centre, telle que la valeur à un instant préalable à celui de la détermination actualisée.

Un extracteur et un identificateur appropriés sont par exemple respectivement connus des demandes de brevet français N° 9206724 du 3 juin 1992 et N° 9210481 du 2 septembre 1992 respectivement.

4

Les buts de l'invention sont atteints au moyen d'un dispositif tel que défini dans le préambule, ce dispositif comprenant au moins pour chaque image à traiter :
- des moyens pour générer des couples (r,e) de valeurs de recherche respectivement dudit rayon et de l'ellipticité de la distribution elliptique de points Mk, et, pour chaque couple (r,e) généré :
- des moyens pour fournir une distribution circularisée dont l'image est représentée, dans un espace plan dit dilaté, par un ensemble de points mk obtenus par l'application, sur chaque point Mk de la distribution elliptique discrétisée, d'une homothétie H définie par :
    . son centre $\Omega$, fixé, dans l'espace discrétisé, au centre de l' ellipse supposé connu de manière approximative par une hypothèse A PRIORI ;
    . son axe, parallèle au petit axe de l'ellipse ;
    . son rapport, égal à la valeur de l'ellipticité e de chaque couple de recherche (r,e) ;
- des moyens pour calculer, par rapport au centre approximatif $\Omega$, la position actualisée du centre Ore de la distribution circularisée, et des moyens pour calculer la distance Dk qui sépare chaque point mk de la distribution circularisée de ce centre actualisé Ore ;
- et des moyens pour sélectionner, parmi les couples de valeurs de recherche (r,e), le couple (Ro,Eo) qui minimise l'énergie d'erreur Err (r,e), calculée A POSTERIORI, entre cette distance Dk calculée, et chaque valeur générée du rayon r du couple des valeurs de recherche (r,e), qui s'exprime par la somme de k = 1 à k = N, des carrés des erreurs entre Dk et r.

Au moyen de cet arrangement, on peut déjà obtenir les valeurs du demi-grand axe de l'ellipse et de son ellipticité, ce que ne faisait pas le dispositif connu de l'état de la technique.

Dans une mise en oeuvre particulière, ce dispositif est caractérisé en ce qu'il comprend en outre, pour chaque couple de valeurs de recherche (r,e),
- d'une part des moyens :
    . pour générer, dans l'espace dit dilaté, une distribution de points Nk disposés à l'intersection d'un cercle ayant pour rayon la valeur r, et pour centre, le centre actualisé Ore, avec le segment Dk correspondant à la distance entre ce centre actualisé Ore et chaque point mk respectivement de la distribution circularisée ;
    . pour transformer cette distribution de points Nk, en une distribution de points Pk représentée dans l'espace discrétisé d'origine, cette transformation étant composée d'une homothétie $H^{-1}$ inverse de l'homothétie H et de la fonction de discrétisation qui définit ledit espace discrétisé ;
    . pour transformer cette distribution discrétisée de points Pk en une distribution de points pk, représentée dans l'espace dit dilaté, cette transformation étant faite par l'application de l'homothétie directe H sur les points pk ;
    . et pour évaluer la distance Rk qui sépare le centre actualisé Ore des points pk de la distribution discrétisée à partir de la valeur r,
- et d'autre part, des moyens pour calculer, pour tout point mk de la distribution dans l'espace dilaté, une quantité "$ep^2$" proportionnelle au carré de l'épaisseur radiale "b" du support de cette distribution sur le segment Dk (Ore, mk), ce dispositif étant de plus caractérisé en ce que, dans le calcul de l'énergie d'erreur Err(r,e), la valeur générée r est remplacée par la valeur calculée de la distance Rk issue des moyens d'évaluation,
    et en ce qu'il comprend en outre des moyens de calcul pour normaliser le carré des erreurs entre Dk et Rk par la quantite "$ep^2$" calculée proportionnelle au carré de l'épaisseur radiale "b".

Au moyen de cette mise en oeuvre du dispositif, les précisions très grandes citées plus haut peuvent être atteintes sur l'ellipticité et le rayon (ou demi-grand axe) de la Terre.

Dans une mise en oeuvre particulière, ce dispositif est caractérisé en ce qu'il comprend en outre, pour chaque image à traiter :
- des moyens pour générer une distribution circularisée de points mko, dans l'espace dit dilaté, par l'application sur chaque points Mk de la distribution elliptique discrétisée d'origine, de l'homothétie directe H définie par :
    . son centre $\Omega$, approximativement fixé au centre de l'ellipse dans l'espace discrétisé,
    . son axe, parallèle au petit axe de l'ellipse,
    . son rapport, égal à l'ellipticité Eo nouvellement calculée, sélectionnée parmi les couples (r,e) ;
- et des moyens de calcul, pour calculer, par rapport audit centre approximatif $\Omega$, et à partir de la valeur Ro nouvellement sélectionnée parmi les couples (r,e), la position recherchée (Xo, Yo) du centre Oo optimisé de la distribution de points MK d'origine.

Au moyen de cet arrangement, la précision citée plus haut est atteinte lors de la détermination de la position du centre Oo de la Terre.

5

Ce dispositif fonctionne en outre de manière autonome, c'est-à-dire sans utiliser de Tables de Valeurs préalablement mesurées des variations d'ellipticité de la Terre au cours de l'année.

Ce dispositif permet donc l'économie de la réalisation et du lancement d'un engin spatial spécialement conçu pour réaliser la mesure des variations d'ellipticité de la Terre en fonction des variations atmosphériques au cours d'une année afin d'établir de telles Tables de Valeurs, avec en outre les limitations d'utilisation de ces Tables que l'on a indiquées.

Les performances de ce dispositif sont tout à fait compatibles avec les conditions très sévères de précision définies plus haut.

L'invention est décrite ci-après en détail, en référence avec les figures annexées dont :
- la figure 1a montre l'image de l'ellipse fournie par un extracteur et le traitement de cette image par une homothétie pour la circulariser, cette image de l'ellipse étant formée de points Mk discrets ;
- la figure 1b montre le système selon lequel l'image de l'ellipse à traiter est discrétisée ;
- la figure 2 montre la transformation de la couronne elliptique sur laquelle est réparti le bruit de l'image d'origine, par l'homothétie correspondant à la figure 1a ;
- la figure 3a illustre la méthode à appliquer aux points de périphérie du cercle à estimer, calculés selon l'invention, pour les transférer dans le même système de discrétisation que ceux de l'ellipse de l'image d'origine ;
- la figure 3b montre que les points calculés et les points de l'image d'origine sont dans le même système de discrétisation, pour que les points résultant de l'application de l'homothétie soient alors calculés avec la même précision ;
- la figure 4 montre le dispositif de calcul des valeurs de l'ellipticité Eo et du rayon Ro, qui sont solutions du critère défini par l'invention, ce dispositif étant représenté sous forme de blocs fonctionnels ;
- la figure 5 montre le dispositif d'identification pour déterminer les coordonnées Xo, Yo du centre Oo de l'ellipse formée des points Mk, et ayant un rayon Ro et une ellipticité Eo, ce dispositif étant représenté sous forme de blocs fonctionnels.

La présente invention concerne un dispositif de traitement d'image ayant des moyens pour déterminer (estimer ou identifier, ces termes pouvant être utilisés au choix de l'homme du métier) les coordonnées Xo, Yo du centre Oo d'un cercle distordu selon une ellipse représentée dans un plan de référence par un ensemble (non vide) de N points Mk disposés de manière bruitée à sa périphérie, ces points Mk étant repérés par leurs coordonnées xk, yk dans ce plan de référence.

Comme on l'a dit plus haut, on suppose connu un dispositif (extracteur) capable de fournir à partir d'une image du disque terrestre enregistrée depuis un engin spatial, une image de son seul contour sous la forme des N points Mk bruités distribués selon une ellipse dans le plan de référence.

Cette image discrétisée du contour du disque terrestre a un demi-grand axe horizontal dit rayon horizontal Ro, et une ellipticité Eo à un instant donné to, instant qui est celui où l'on cherche à déterminer le plus exactement possible les valeurs du rayon Ro, de l'ellipticité Eo et des coordonnées Xo, Yo du centre Oo, à partir des coordonnées xk, yk des N points Mk dans le plan de référence.

On supposera dans ce qui suit que le rayon Ro de l'ellipse dans l'image formée sur le plan de référence est de l'ordre de 100 pixels, que l'ellipticité Eo est faible, de l'ordre de 3/1000. De plus, les coordonnées xk, yk des N points Mk discrétisés sont connues au pixel près. On définit sur le plan de référence, une fonction de discrétisation qui fait correspondre à tout point du plan ayant des coordonnées de précision infinies, les coordonnées d'une cellule de discrétisation, c'est-à-dire d'un pixel.

On cherche à déterminer, à partir de cette image discrétisée peu précise, le centre Oo au dixième de pixel près, et l'ellipticité Eo avec une précision meilleure que le 1/1000, c'est-à-dire entre 1/10 000 et 1/1000.

Dans l'identification du centre de la Terre, l'homme du métier peut toujours considérer que l'on connaît une valeur de départ approximative ro du rayon terrestre, ainsi qu'une valeur approximative eo de son ellipticité.

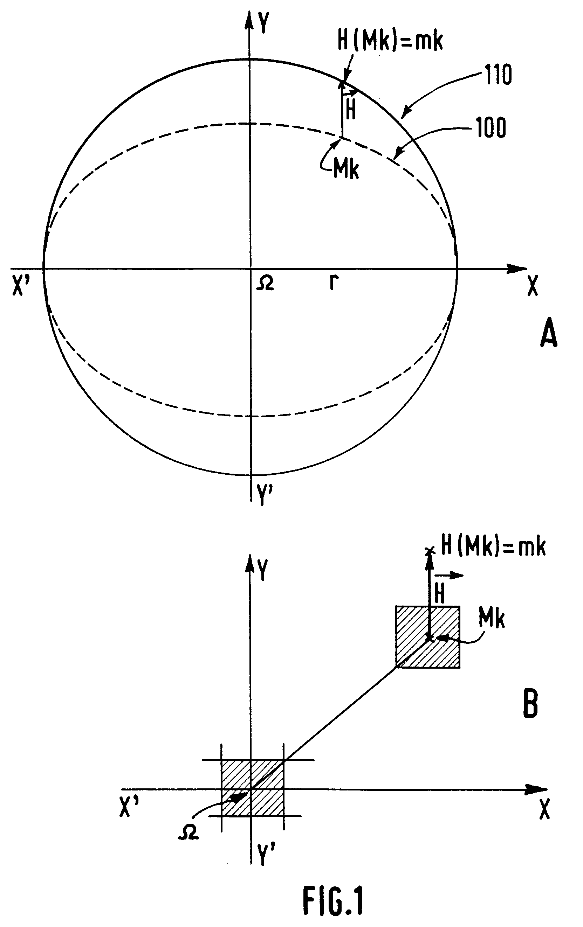

En référence avec la figure 1a, l'ellipse 100, image du contour du disque terrestre, est supposée centrée en $\Omega$ (o,o) origine du plan de référence d'axes X'X, Y'Y parallèles aux grand axe, et petit axe de l'ellipse 100 respectivement. Avec cette hypothèse A PRIORI, l'image de l'ellipse à traiter se trouve approximativement centrée. On suppose que le dispositif de traitement d'image est doté de moyens connus de l'homme du métier pour effectuer ce centrage approximatif, ainsi que l'orientation des axes de l'ellipse par rapport aux axes $\Omega X$, $\Omega Y$ du plan de référence. L'ellipticité Eo à déterminer est le rapport des grandeurs du demi-axe horizontal (grand-axe) ayant pour valeur ledit rayon Ro sur le demi-axe vertical (petit axe). Donc cette ellipticité Eo est supérieure à 1.

Dans l'identification du centre de la Terre en temps réel, on peut toujours considérer que l'homme du métier connaît une valeur approximative des coordonnées du centre de la Terre ; cette valeur approximative peut être une valeur déterminée à un instant t précédant l'instant to où l'on veut déterminer le centre exact Oo correspondant aux points Mk résultats de l'extraction à cet instant to ; ce mode de détermination d'un centre approximatif Ω est valable du fait que, entre deux images consécutives séparées en général par un intervalle de 1/25 sec., en mode poursuite, la Terre s'est peu déplacée par rapport à un engin spatial géostationnaire qui porte le dispositif de traitement d'image. Cette valeur approximative peut aussi être déterminée par un dispositif d'identification tel que connu de l'état de la technique, qui donne le centre de la Terre de manière peu précise mais suffisante pour la détermination du centre Ω.

Pour centrer l'ellipse 100 en Ω comme montré sur la figure 1a, on supposera que la sortie de l'extracteur est munie de moyens de calculs pour effectuer la translation de l'image de l'ellipse dans le plan de référence jusqu'à ce quelle soit centrée approximativement en Ω, et que ses axes coïncident approximativement avec les axes ΩX, ΩY.

La figure 1b montre que l'image de l'ellipse 100 est formée dans le plan X'X, Y'Y, et centrée en Ω, de manière telle que les points Mk du contour de l'ellipse et le centre Ω sont discrétisés dans des cellules de dimension 1 x 1 pixel. Sur la figure 16 les points Ω et Mk sont au centre de ces cellules. Ces cellules peuvent correspondre aux éléments CCD d'enregistrement de l'image du disque terrestre.

Selon l'invention, on se propose de déterminer avec les précisions citées plus haut, les valeurs de Eo, Ro, et Oo (Xo, Yo) à partir de la connaissance des Mk (xk, yk), Ω(o,o) et du couple ro, eo de départ.

A cet effet, on suppose connu de l'homme du métier, ou encore que l'homme du métier a en sa possession, un premier dispositif du type estimateur ou identificateur, appelé ci-après :

"R → msq"

qui est capable, à partir de la connaissance des coordonnées de points mk répartis sur un cercle parfait, approximativement centré sur l'origine Ω(o,o) du plan dans lequel ces coordonnées sont repérées, de déterminer les coordonnées du centre actualisé Ore de ce cercle parfait, par une méthode dite des moindres carrés (msq) qui prend en compte une connaissance du rayon de ce cercle parfait, rayon qui prend ici une valeur r.

Ce premier identificateur, qui peut être favorablement celui connu de la demande de brevet français N° 9210481 non publiée, conduit donc :

- à partir de la connaissance des coordonnées des points mk de périphérie du cercle idéal définies au moins au pixel près ;
- de la connaissance de son rayon r, de l'ordre de 100 pixels ;
- de la connaissance de son centre approximatif Ω(o,o) défini au moins au pixel près ;

à l'identification du centre Ore, actualisé en fonction de la valeur de r et des mk :

Ore(mk, r, Ω)

qui exprime que le centre actualisé Ore est maintenant connu par la mise en oeuvre de l'identificateur "R → msq", qui s'écrit ici "r → msq", en fonction des mk, de r et de Ω.

L'homme du métier peut profiter des possibilités de l'identificateur "R → msq" à condition d'utiliser des moyens de transformation de la distribution elliptique formée des points Mk en une distribution circularisée de points mk.

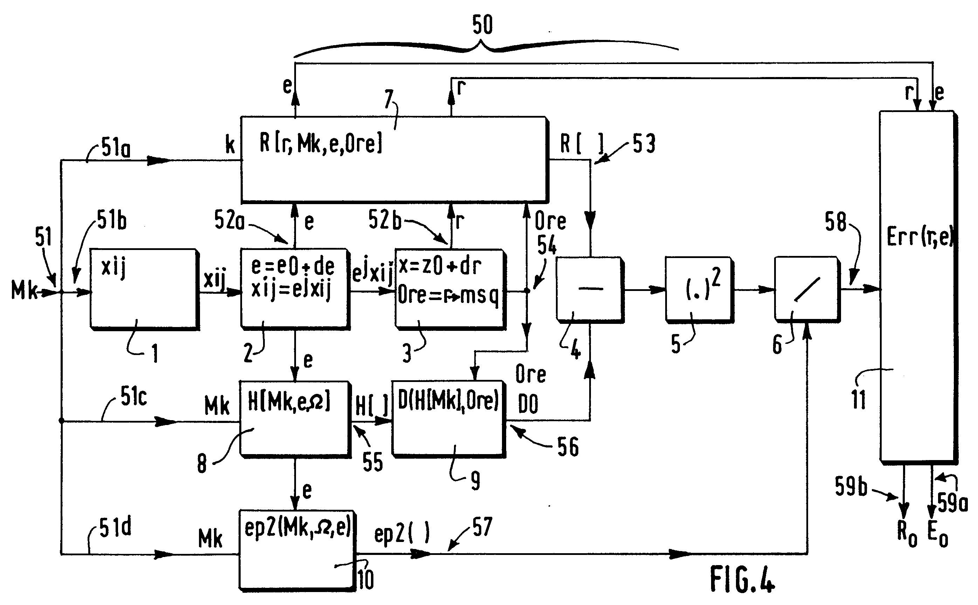

Dans le dispositif selon l'invention, ces moyens de transformation (en anglais reshaping) consistent en des moyens de calcul 8 (voir la figure 4) pour appliquer une homothétie

désignée par H, et représenté par $\vec{H}$ sur les figures,

de centre Ω,

d'axe parallèle à l'axe Y'Y dit vertical (ou petit axe de l'ellipse),

de rapport l'ellipticité e.

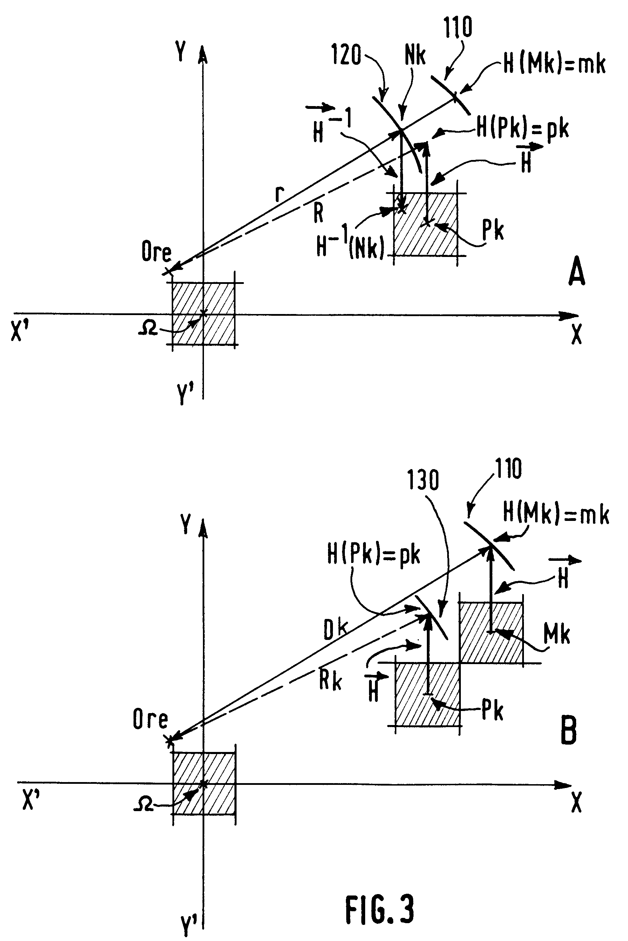

Les transformées des points Mk de l'ellipse sont les points H(Mk) obtenus par l'homothétie H appliquée sur les points Mk, qui sont appelés mk en référence avec les figures 1a et 1b, et avec les figures 3a et 3b.

A la sortie des moyens de calcul 8, on dispose donc de la distribution dite circularisée 110 de N points mk qui sont les transformées par H des N points Mk de la distribution elliptique 100. L'image de la distribution circularisée 110 est formée dans un espace plan dit dilaté.

Un identificateur du type "R → msq" (référencé 1,2,3 sur la figure 4) est ensuite appliqué à la distribution 110 de points mk pour déterminer son centre Ore actualisé en fonction de r, et aussi de e puisque le calcul des points mk dépend de la valeur de e.

En plus de cette distribution circularisée 110 de points mk centrée en Ore, des moyens de calculs 3 (voir figure 4) fournissent les points Nk d'une distribution circulaire centrée en Ore ayant le rayon r utilisé dans les calculs précédents.

Pour chaque image extraite en temps réel, la détermination des valeurs Ro, Eo relatives au modèle idéal d'un cercle centré exactement en Oo est réalisée par la détermination du couple (Ro, Eo) sélectionné parmi plusieurs couples de valeurs de recherche (r,e), et qui minimise l'énergie représentée par le critère C1 suivant :

$$C1 = Err[r,e] = S \; [Dk(H[Mk,\Omega,e]Ore) - r]^2, \{k,1,N\}]$$

qui peut s'écrire plus simplement :

$$C1 = Err(r,e) = S \; \{[Dk(mk,Ore)-r]^2, (k,1,N)\} \qquad 1)$$

Dans cette formule :
- Dk est la distance entre les points mk de la distribution 110 et le centre calculé dit actualisé Ore dont la détermination dépend de r et de e ;
- r est le rayon du couple de valeurs de recherche (r,e),
- et e est l'ellipticité du couple de valeur de recherche (r,e).

En référence avec la figure 4, le dispositif d'identification selon la présente invention comporte donc des moyens de calcul représentés par les blocs fonctionnels 1 à 11.

Dans le bloc 2, sont générées différentes valeurs d'ellipticité e, et dans le bloc 3 sont générées différentes valeurs de rayon r. Pour chacune de ces valeurs, une distribution circulaire 110 de points mk est calculée en 8, par l'homothétie H ; un centre Ore est calculé en 3 au moyen de l'identificateur "R → msq" ; puis la distance Dk (mk, Ore) est calculée dans le bloc 9.

Il semble qu'il suffirait alors à l'homme du métier de prévoir un bloc de calcul de la différence [Dk(mk, Ore) - r]$^2$ pour atteindre aux buts de l'invention. De cette manière, l'homme du métier peut déjà calculer l'ellipticité et ledit rayon (demi-grand axe de l'ellipse) ce qui n'était pas connu des dispositifs cités de l'état de la technique.

Mais selon l'invention, on veut en outre atteindre des précisions spécifiques.

Plusieurs problèmes apparaissent alors à ce niveau, pour atteindre de telles performances, car le couple (r,e) qui minimise le critère C1 n'est pas obtenu avec ces précisions citées.

Il faut alors déterminer les causes de cette insuffisance et apporter aux problèmes posés, des solutions compatibles avec la réalisation d'un dispositif d'identification satellisable, c'est-à-dire fiable, compact et travaillant en temps réel.

Les causes de l'insuffisance affectant la précision résident dans les problèmes suivants :

A/ Il faut d'abord prendre conscience que la distribution bruitée de points Mk formant l'ellipse 100 couvre un anneau fin 101 délimité par deux ellipses 100a et 100b.

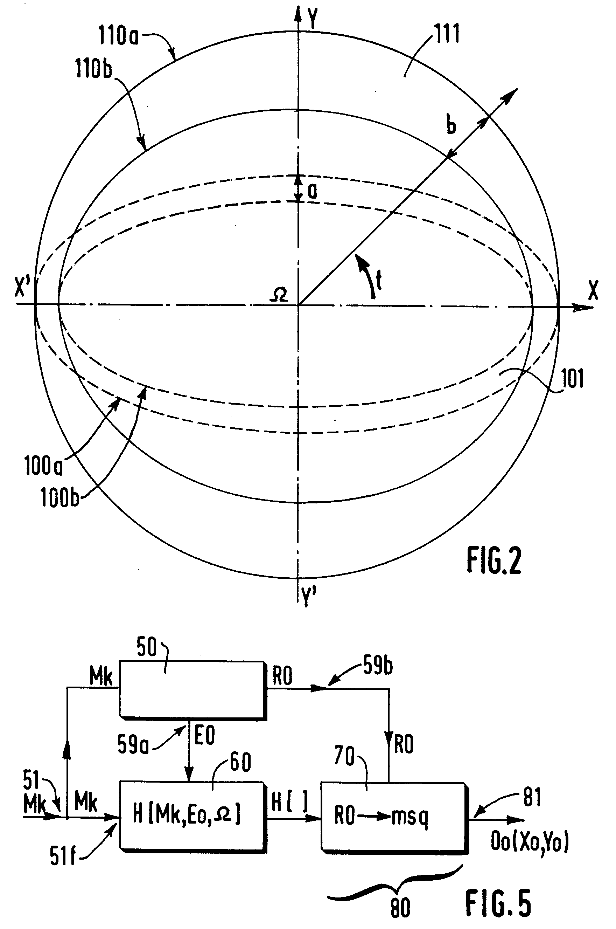

En référence avec la figure 2, cet anneau est représenté spécialement élargi de manière à mettre en évidence plus clairement les effets néfastes qui en découlent, lorsque l'homothétie H est appliquée à la distribution des points Mk dans le but d'obtenir une distribution circularisée de points mk en 110. Comme il apparaît sur la figure 2, par l'effet de l'homothétie H, l'anneau 101 qui avait une épaisseur "a" constante, ou sensiblement constante, est transformé en un anneau 111 délimité par les courbes 110a et 110b, qui montre une épaisseur radiale "b" variable en fonction de l'angle t que fait avec l'axe X'X le rayon sur lequel on mesure cette épaisseur "b".

Or la mise en oeuvre du critère C1 donnant l'erreur A POSTERIORI entre la distribution résultant de la mesure, et le modèle de recherche, revient à calculer l'énergie des erreurs radiales (Dk - r)$^2$ constituées par la différence entre le rayon r du cercle 120 recherché et celui Dk de la distribution 110 circularisée calculée à partir des données correspondant à l'image observée, pour chaque point Mk.

Du fait de la variation radiale du support "b" de la distribution 110 calculée à partir de l'image observée, certaines erreurs ont un poids plus grand que d'autres dans le calcul du critère C1.

Il est vrai que l'on connaît seulement avec inexactitude l'étendue "a" du support des points Mk bruités dans le modèle 100 résultant de l'observation.

Néanmoins, on peut effectuer une normalisation des erreurs en divisant la différence (Dk - r) par un facteur proportionnel au rapport b/a.

Ce facteur de proportionnalité intervient sous la forme d'un carré dans la formule du critère C1. Il peut s'exprimer par la grandeur ep$^2$ selon la formule :

$$ep^2 \text{ inversement proportionnel à } [\cos(t)]^2 + [e \; Sin(t)]^2$$

où t est l'angle fait par un rayon avec l'horizontale X'X dans le plan des images de l'ellipse 100 et de la

EP 0 605 027 A1

distribution circularisée 110 comme montré sur la figure 2.

B/ L'extracteur qui fournit l'image de l'ellipse 100 fournit en réalité une image discrétisée composée de pixels dans laquelle les points Mk sont repérés par leurs coordonnées xk, yk dans le plan (ΩX, ΩY) dit plan de référence ou espace plan discrétisé. Ceci est dû au fait que l'extracteur sélectionne pour les points Mk les points situés à l'interface "Disque terrestre-Espace sidéral" à partir d'une image du disque terrestre composée de pixels correspondant chacun à un élément d'une matrice d'éléments photosensibles tels que des CCD par exemple.

Or l'épaisseur de la couronne 101 sur laquelle les points Mk de périphérie sont distribués est de l'ordre de 1 pixel, et l'on cherche à estimer (ou déterminer) des variations "de" de l'ellipticité "e" qui sont de l'ordre de grandeur de 1/1000, l'ellipticité "e" de la Terre étant de l'ordre de 3/1000.

Donc il faut s'attendre à ce que ces variations d'ellipticité "de" de 1/1000 engendrent des variations du rayon à calculer de l'ordre de 0,1 pixel sur un rayon de 100 pixel, dans une image où il existera déjà une différence de 0,3 pixel entre la grandeur du rayon horizontal et celle du rayon vertical.

Il en résulte que les grandeurs calculées seront des grandeurs non discrétisées, alors que les grandeurs de l'image d'origine, ou image à traiter, sont des grandeurs discrétisées, et que l'on ne peut pas comparer une grandeur discrétisée avec une grandeur calculée, car les erreurs attachées à la grandeur discrétisée masqueraient complètement les variations que l'on veut estimer et qui sont beaucoup plus petites que la distance entre deux pixels.

Ainsi, il se trouve que dans le critère C1 on se propose de calculer la différence de deux grandeurs Dk et r qui n'ont pas été obtenues par une suite de calculs faits avec des précisions comparables, et qui, pour la raison exposée plus haut ne peuvent donc pas être comparées.

En effet, la grandeur Dk est le rayon de la distribution des points mk qui sont obtenus par l'opération d'homothétie H sur les points Mk discrétisés, c'est-à-dire situés au centre de cellules représentant les pixels de l'image à traiter, comme montré sur la figure 1b.

Pour la grandeur "r" il en va différemment. Cette grandeur "r" est un rayon généré avec des petites différences "dr" par rapport à une valeur de départ ro, par exemple avec un pas de 1/10 de pixel en 1/10 de pixel, par le bloc 3 du dispositif montré sur la figure 4, de manière à rechercher la valeur qui va minimiser le critère C1.

En référence avec la figure 3a, on va rendre les grandeurs Dk et r calculées avec des précisions comparables. A cet effet, on va donc appliquer aux points NK du cercle 120 de rayon "r" et de centre Ore une suite d'opérations destinées à engendrer une grandeur Rk correspondant à chaque "r", et correspondant au rayon d'un cercle formés de points pk obtenus avec une précision comparable à celle qui a permis d'obtenir les points mk.

A cet effet, on fait subir à chaque point Nk situé sur le cercle 120 de rayon "r" et de centre Ore, à l'intersection avec le segment Dk (Ore, mk), une homothétie $H^{-1}$ exactement inverse de l'homothétie H, représentée par $\vec{H}^{-1}$ sur les figures.

Par cette opération $H^{-1}$ sur les Nk, on obtient un ensemble (non vide) de points désignés par le terme $H^{-1}$(Nk).

Puis on considère ces points $H^{-1}$(Nk) dans le système discrétisé (Ω, Mk) et on fait correspondre à chaque point $H^{-1}$(Nk) un point Pk, par exemple situé au centre de la cellule correspondant à un pixel, qui contient le point $H^{-1}$(Nk). Ce faisant, on effectue une troncature de la valeur des coordonnées des points $H^{-1}$(Nk) pour les rendre entiers.

Ensuite, on applique aux points Pk discrétisés dans le même système que les points Mk, l'opération d'homothétie directe H qui engendre l'ensemble non nul de points H(Pk) désignés ci-après par les termes pk.

De par cette suite d'opérations résumées :

$$Nk \rightarrow H^{-1}(Nk) \rightarrow discr\ H^{-1}(Nk) = Pk \rightarrow H(Pk) = pk,$$

il résulte que les points pk sont obtenus par un calcul de précision comparable avec celle qui engendre les points mk, c'est-à-dire l'homothétie directe H appliquée à un point de l'espace plan discrétisé (Ω, Mk).

En référence avec la figure 3b, les points pk sont donc obtenus avec la même précision que les points mk. Et il en résulte que, si l'on désigne par le terme "Rk" la grandeur du segment (Ore, pk) qui sépare le centre calculé Ore des points pk, le calcul de la différence

(Dk - Rk)

a maintenant un sens puisque ces deux grandeurs sont entachées d'erreurs du même ordre de grandeur, alors que le calcul de la différence (Dk - r) dans le critère C1 ne conduisait pas aux performances extrêmes souhaitées du fait que les grandeurs Dk et r étaient entachées d'erreurs trop différentes.

9

Pour prendre en compte les remarques A/ et B/ précédentes, le dispositif selon l'invention mettra en oeuvre le calcul du critère C2 qui s'écrit :

C2 = Err[r,e] =

S [(*Dk*(*H*[Mk,Ω,*e*],*Ore*)-Rk[r,*Mk,e,Ore*]]$^2$/ep$^2$(Mk,Ω,*e*),{*k*,1,*N*}]

ou plus simplement :

C2 = S {[Dk-Rk)$^2$/ep$^2$], (k,1,N)}     2)

dans lesquelles Dk et Rk sont obtenus comme décrit en détail précédemment.

En référence avec la figure 4, pour chaque image, en temps réel, l'estimation (ou détermination) de l'ellipticité recherchée Eo et du rayon recherché Ro se fait en recherchant parmi plusieurs couples de valeurs de recherche (r,e), le couple (Ro, Eo) qui minimise le critère C2.

Cette détermination est faite dans une première partie 50 du dispositif selon l'invention concrétisé sur la figure 4 par les blocs fonctionnels 1 à 11.

Les coordonnées des points Mk fournies par un extracteur connu par exemple de la demande de brevet déposée en France sous le N° 9206724 le 3 juin 1992, non publiée, sont introduites en 51, dans une chaîne 51b formée des blocs 1, 2 et 3, qui d'une part génèrent des rayons r et des ellipticités e, et qui d'autre part calculent le centre Ore, ceci étant effectué de préférence comme il est enseigné dans la demande de brevet déposée en France sous le N° 9210481 le 2 septembre 1992.

A cet effet, le bloc 1 constitue des moyens pour calculer des quantités proportionnelles aux 9 premiers moments géométriques relatifs aux points Mk de la distribution 100, de coordonnées xk, yk dans le plan de référence (ΩX, ΩY).

Ces quantités proportionnelles aux moments sont :

Xi = S[xk$^i$, (k, 1, N)]

qui exprime que Xi est la somme de k = 1 à k = N des abscisses xk des points Mk à la puissance i ;

Yi = S[yk$^i$, (k, 1, N)]

qui exprime que yi est la somme de k = 1 à k = N des ordonnées yk des points Mk à la puissance i ;

XYij = S[xk$^i$.yk$^j$, (k, 1, N)]

qui exprime que XYij est la somme de k = 1 à k = N des produits des abscisses xk à la puissance i, par les ordonnées yk à la puissance j.

Dans les expressions Xi, Yj, i ϵ [1,3]
et dans l'expression XYij, (i + j) ⟨ 4 avec i ⟩ O.

Les quantités qui correspondent aux moments d'ordre 3 ou moins et qui sont calculées dans le bloc fonctionnel 1, sont donc :

X1, X2, X3
Y1, Y2, Y3
XY11, XY12, XY21

Les coordonnées (x, y) du centre recherché Ore sont données par le calcul des racines (ou solutions) des équations suivantes :

αx$^2$ + β x + j = O     3)

y = Ax + B     4)

dans lesquelles :

$$A = \frac{X1.XY11 - X2.Y1}{Y1.XY11 - Y2.X1} \qquad\qquad 5)$$

$$B = \frac{X3.Y1 + Y1.XY12 - Y3.X1 - X1.XY21}{2Y1.XY11 - Y2.X1} \qquad\qquad 6)$$

$$\alpha = (1 + A^2)X1 \qquad 7)$$

$$\beta = (X2 + XY11A - A.B\ X1) \qquad 8)$$

$$\gamma = (X3 - 2\ XY11B + XY12 - R^2X1 + X1B^2) \qquad 9)$$

Parmi les deux groupes de solutions possibles aux équations 3) et 4), on choisit celui qui correspond aux coordonnées les plus proches du centre Ω du plan de référence.

Cette manière de rechercher les coordonnées du centre Ore à partir de la distribution Mk et de la connaissance d'un centre approximatif Ω et d'un rayon approximatif r, est entièrement décrite dans le document cité.

Tout autre dispositif permettant d'arriver au même résultat, à partir des mêmes données, peut être utilisé en remplacement de cette fonction des blocs 1, 2, 3. La sortie 54 fournit les coordonnées (x,y) du centre Ore.

Néanmoins, il faut noter que le calcul du centre Ore est subordonné à des systèmes capables de générer des valeurs "r" et des valeurs "e". De même la recherche du minimum du critère C2 est subordonnée à la génération de ces valeurs.

Dans le dispositif décrit en référence avec la figure 4, les valeurs "r" sont générées dans le bloc 2, et les valeurs "e" sont générées dans le bloc 3.

En fait, de préférence, on génère des petites différences "dr" et "de" respectivement de rayon et d'ellipticité, que l'on applique à une valeur de départ ro et eo. Les calculs peuvent être effectués en recherchant dans quel sens positif ou négatif il faut continuer à générer les différences "dr" et "de" par rapport aux valeurs de départ ro, eo, pour aller dans le sens de la diminution de la valeur du critère C2. A cet effet, l'homme du métier connaît des algorithmes de recherche de minima qui peuvent être appliqués ici avec profit.

Les petites différences "de" et "dr" peuvent être choisies avec un certain pas, constant ou non, de l'ordre de la précision que l'on veut finalement obtenir sur le rayon et l'ellipticité. Et on recherche avec ce pas le meilleur couple (r,e) parmi tous les couples possibles. L'expérimentation montre que le minimum du critère C2 est très marqué et que l'incertitude est bornée.

Ainsi pour chaque couple (r = ro + dr et e = eo + de) généré, on obtient en sortie du bloc 3, une valeur des coordonnées (x,y) du centre Ore.

On a vu plus haut que, pour le calcul du centre Ore, il était d'abord nécessaire de calculer les coordonnées des points circularisés mk à partir de celles des points Mk de la distribution elliptique d'origine, ceci par l'application de l'homothétie H.

Or, pour le calcul de Ore, il est nécessaire comme le montrent les équations 3 à 9 de disposer de la valeur des moments Xi, Yi, XYij.

Dans le but de satisfaire à la condition de calculs en temps réel imposé au dispositif selon l'invention, on réduit le temps de calcul en appliquant le facteur d'échelle "e" de l'homothétie H directement aux moments.

Ainsi au lieu de recalculer pour chaque couple (r,e) les quantités Xi, Yi, XYij proportionnelles aux moments, on multiplie simplement ces quantités par une puissance du nouveau e pour chaque couple essayé.

Cette méthode permet une économie considérable de temps de calcul, car les quantités Xi, Yi, XYij sont calculées une seule fois par image à traiter, et seule la multiplication par les différentes valeurs de l'ellipticité "e" sont effectuées dans le bloc fonctionnel 2 autant de fois que de valeurs de "e" sont générées pour la recherche du minimum du critère C2.

Le changement d'échelle appliqué sur les quantités proportionnelles aux moments Xi, Yi, XYij au moyen de la multiplication par une puissance de "e" est appelé ci-après "normalisation des moments".

En référence avec la figure 4, les coordonnées des points Mk de la distribution elliptique d'origine est appliquée sur la branche 51c à l'entrée d'un bloc fonctionnel 8 qui calcule les coordonnées des points mk directement par l'application de l'homothétie H de centre Ω et rapport "e", les valeurs de "e" venant du bloc 2.

Puis, un bloc 9 calcule la distance Dk entre les points mk sortant en 55 du bloc 8 et le centre Ore sortant en 54 du bloc 3. Cette distance Dk est disponible en 56 à la sortie du bloc 9.

D'autre part, les coordonnées des points Mk sont introduites en 51 dans un bloc 7 qui calcule la distance Rk entre le centre Ore et les points pk résultant de la discrétisation des points Nk par la méthode qui a été décrite en détail en référence avec les figures 3a et 3b. A cet effet, le bloc 2 fournit les différentes valeurs générées de "e" en 52a, de "r" en 52b et de Ore en 54. La valeur de Rk est disponible à la sortie du bloc 7 en 53.

Le bloc 4 effectue ensuite le calcul de la différence (Dk - Rk), puis le bloc 5 effectue le carré de cette différence, ce qui produit $(Dk - Rk)^2$.

En référence avec la figure 4, on introduit les valeurs des coordonnées des points Mk de la distribution elliptique d'origine dans un bloc 10 qui calcule le carré de l'épaisseur $ep^2$ de la couronne 111 et en fournit la valeur en 57.

Cette valeur $ep^2$ est introduite dans le bloc 6 avec la valeur du carré de la différence $(Dk - Rk)^2$.

Et ce bloc 6 calcule le rapport $(Dk - Rk)^2/ep^2$ pour chacune des valeurs du couple (r,e) généré. Le résultat de ce calcul est disponible en 58 et introduit dans un bloc 11 qui calcule le critère C2 = Err(r,e) par intégration des données disponibles en 58, et qui fournit, à sa sortie 59a, la valeur Eo de l'ellipticité, et à sa sortie 59b, la valeur Ro du rayon horizontal (demi-grand axe) recherchées.

Pour chaque image elliptique formée de points Mk de la Terre, le dispositif 50 de la figure 4 calcule en temps réel et de manière indépendante, les valeurs du rayon exact Ro et de l'ellipticité exacte Eo avec la précision requise citée plus haut.

En référence avec la figure 5 le dispositif selon l'invention, peut maintenant d'une manière indépendante, c'est-à-dire sans l'aide de Tables de Valeurs préenregistrées, calculer les coordonnées du centre exact Oo de la distribution elliptique de points Mk.

L'ensemble des blocs de la figure 4 est représenté sur la figure 5, par le seul bloc 50, avec ses sorties 59a pour Eo et 59b pour Ro.

Ces valeurs calculées Eo et Ro sont introduites dans un bloc 60 qui reçoit aussi en 51f les valeurs des coordonnées des points Mk. Ce bloc 60 applique alors aux points Mk l'homothétie H, cette fois avec le rapport Eo nouvellement calculé, mais encore avec le centre Ω approximatif, pour fournir une distribution de points mko dans l'espace dilaté.

Les coordonnées des points mko obtenues par cette homothétie H [Mk, Eo, Ω], et le rayon Ro nouvellement calculé, sont introduits dans un bloc 60 de calcul, de structure analogue aux blocs 1, 2, 3 de la figure 4, qui calcule par les équations 3 à 9, selon le principe "R → msq" qui s'écrit ici "Ro → msq", les coordonnées Xo, Yo du centre Oo actualisé correspondant aux valeurs nouvellement calculées (Eo, Ro), ces coordonnées étant fournies en 81 au dispositif représenté sur la figure 5.

Les blocs fonctionnels 1 à 11 de la figure 4, formant le bloc 50, et les blocs 60 et 70 de la figure 5, peuvent être réalisés par des cartes de calcul préprogrammées, de manière à être embarquées sur l'engin spatial que l'on veut orienter par rapport à l'axe formé par sa position et le centre de la Terre.

En référence avec la figure 4, de préférence, avant le calcul du minimum de l'erreur Err(r,e), on stocke chaque résultat de calcul d'erreur à l'adresse (r,e) correspondant à chaque couple (r,e) généré. Puis, pour chaque image, on calcule le minimum de l'Err (r,e).

L'expérimentation du dispositif selon l'invention, qui a été faite de manière extensive, a montré que, pour obtenir des résultats de calcul plus robustes, il était nécessaire d'intégrer l'énergie Err (r,e) sur plusieurs images consécutives.

Donc, il est recommandé de réaliser le calcul de Err(r,e) pour chaque image, puis d'accumuler les résultats dans le temps, sinon les résultats n'ont pas la robustesse compatible avec la précision au 1/10 de pixel qui est recherchée sur les grandeurs Ro, ou les coordonnées de Oo, et 1/1000 sur l'ellipticité Eo.

L'expérimentation a montré qu'il faut en pratique entre 50 et 100 images pour obtenir une bonne estimation du couple (r,e). Ce qui fait que, de préférence, on accumule les valeurs de (r,e) dans une mémoire pendant 50 à 100 images.

Cette accumulation peut être réalisée par un filtrage récursif. Il en résulte que, dans le calcul de (Eo, Ro) dans le bloc 11 de la figure 4, on a d'abord une période d'initialisation qui dure le temps de former 50 images ou un peu plus, et à la suite de laquelle on effectue une moyenne pondérée des valeurs accumulées de (r,e). Et à partir de cette période d'initialisation, on aura obenu des valeurs suffisamment robustes pour que les valeurs calculées en correspondance avec une image donnée puissent servir de base aux calculs des valeurs recherchées relatives à l'image qui suit immédiatement.

Ainsi, grâce au dispositif selon l'invention, on est en mesure d'éviter la réalisation et le lancement d'un satellite ayant pour mission la mesure directe des valeurs de Eo et Ro pour chaque heure et jour de l'année, afin de constituer des Tables de Valeurs nécessaires au calcul de Oo (Xo, Yo) et à l'orientation d'un engin spatial en fonction de ce dernier point. Il s'agit là d'une économie considérable, d'autant plus que ces Tables ont une utilité limitée.

L'estimateur complet qui peut être réalisé selon l'invention en associant un extracteur capable de fournir le contour de Terre formé des points Mk, pour chaque image du disque terrestre enregistrée au moyen d'un dispositif à CCD par exemple, et un identificateur décrit plus haut en détail, permet de réaliser un senseur de Terre tout à fait autonome.

La procédure d'estimation de Eo et Ro donne actuellement pour un rayon de l'ordre de 100 pixels une précision de 1/10 de pixel sur le rayon Ro, de 1/1000 sur l'ellipticité Eo et de 1/10 de pixel sur la position du centre Oo (Xo, Yo).

En phase de poursuite, le dispositif de formation d'images du disque terrestre produit environ 10 images par seconde. La Terre tournant en 24H, entre deux images on peut considérer qu'elle a peu bougé. Et après la période d'initialisation dont on a parlé précédemment, le nombre d'ellipticité eo + de, et de rayons ro + dr que l'on doit essayer pour trouver le minimum du critère, est en réalité très faible. Ce nombre est de l'ordre de 3. C'est un simple encadrement.

A un instant donné, correspondant à une image dite précédente, la valeur correspondant au minimum était le couple (r,e). A l'instant suivant, correspondant à l'image en cours, on essaye seulement :

r, r + dr et r-dr

e, e + de et e-de

c'est-à-dire 3 ellipticités et 3 rayons. Cela ne représente pas des calculs montrueux, mais au contraire très économiques.

En phase d'acquisition, l'expérience a montré, qu'il faut générer une dizaine de valeurs pour chaque élément du couple (r,e). Par contre on peut baisser la fréquence à laquelle on forme les images.

La mise en oeuvre du dispositif selon l'invention qui requiert des calculs simples, peut être faite au moyen de matériel simple, dans des technologies éprouvées, connues de l'homme du métier donc tout à fait compactes, fiables et compatibles avec la satellisation d'un engin spatial.

Le coût de ce dispositif est même extrêmement faible devant le coût du satellite lui-même, surtout lorsque l'on considère que sans ce dispositif autonome, il aurait fallu envisager le lancement supplémentaire d'un satellite de mesures préalables, et que tout changement de matériel (nouveau dispositif d'enregistrement d'image à CCD, nouvel extracteur) rendait en plus ces mesures vaines.

## Revendications

1. Dispositif de traitement d'image en temps réel, pour déterminer la valeur du demi-grand axe dit rayon Ro, la valeur de l'ellipticité Eo et la position du centre Oo d'une ellipse dont l'image (100) est représentée, dans un espace plan discrétisé, par un ensemble (non vide) de points Mk, ce dispositif comprenant au moins pour chaque image à traiter :
   - des moyens (2,3) pour générer des couples (r,e) de valeurs de recherche respectivement dudit rayon et de l'ellipticité de la distribution elliptique (100) de points Mk, et, pour chaque couple (r,e) généré :
   - des moyens (8) pour fournir une distribution circularisée dont l'image (110) est représentée, dans un espace plan dit dilaté, par un ensemble de points mk obtenus par l'application, sur chaque point Mk de la distribution elliptique discrétisée (100), d'une homothétie H définie par :
     . son centre $\Omega$, fixé, dans l'espace discrétisé, au centre de l'ellipse (100) supposé connu de manière approximative par une hypothèse A PRIORI ;
     . son axe, parallèle au petit axe de l'ellipse (100) ;
     . son rapport, égal à la valeur de l'ellipticité e de chaque couple de recherche (r,e) ;
   - des moyens (1, 2, 3) pour calculer, par rapport au centre approximatif $\Omega$, la position actualisée du centre Ore de la distribution circularisée (110), et des moyens (9) pour calculer la distance Dk qui sépare chaque point mx de la distribution circularisée (110) de ce centre actualisé Ore ;
   - et des moyens (4, 5, 11) pour sélectionner, parmi les couples de valeurs de recherche (r,e), le couple (Ro,Eo) qui minimise l'énergie d'erreur Err (r,e), calculée A POSTERIORI, entre cette distance Dk calculée, et chaque valeur générée du rayon r du couple des valeurs de recherche (r,e), qui s'exprime par la somme de k = 1 à k = N, des carrés des erreurs entre Dk et r.

2. Dispositif selon la revendication 1, caractérisé en ce qu'il comprend en outre, pour chaque couple de valeurs de recherche (r,e),
   - d'une part des moyens (7)

EP 0 605 027 A1

. pour générer, dans l'espace dit dilaté, une distribution (120) de points Nk disposés à l'intersection d'un cercle ayant pour rayon la valeur r, et pour centre, le centre actualisé Ore, avec le segment Dk correspondant à la distance entre ce centre actualisé Ore et chaque point mk respectivement de la distribution circularisée (110) ;

. pour transformer cette distribution (120) de points Nk, en une distribution de points Pk représentée dans l'espace discrétisé d'origine, cette transformation étant composée d'une homothétie $H^{-1}$ inverse de l'homothétie H et de la fonction de discrétisation qui définit ledit espace discrétisé ;

. pour transformer cette distribution discrétisée de points Pk en une distribution (130) de points pk, représentée dans l'espace dit dilaté, cette transformation étant faite par l'application de l'homothétie directe H sur les points pk ;

. et pour évaluer la distance Rk qui sépare le centre actualisé Ore des points pk de la distribution (130) discrétisée à partir de la valeur r,

- et d'autre part, des moyens (10) pour calculer, pour tout point mk de la distribution (110) dans l'espace dilaté, une quantité "$ep^2$" proportionnelle au carré de l'épaisseur radiale "b" du support (110a, 110b) de cette distribution (110) sur le segment Dk (Ore, mk), ce dispositif étant de plus caractérisé en ce que, dans le calcul de l'énergie d'erreur Err(r,e), la valeur générée r est remplacée par la valeur calculée de la distance Rk issue des moyens d' évaluation (7), et en ce qu'il comprend en outre des moyens de calcul (6) pour normaliser le carré des erreurs entre Dk et Rk par la quantité "$ep^2$" proportionnelle au carré de l'épaisseur radiale "b" issue des moyens de calcul (10).

3. Dispositif selon l'une des revendications 1 ou 2, caractérisé en ce que l'énergie de l'erreur Err(r,e) est intégrée au cours du temps à partir des distributions Mk de l'espace discrétisé issues de plusieurs images à traiter successives.

4. Dispositif selon l'une des revendications 1 à 3, caractérisé en ce que les couples de valeurs de recherche (r,e) sont choisis parmi des ensembles (non vides) de valeurs fixées A PRIORI en fonction de la précision recherchée sur le rayon Ro et l'ellipticité Eo.

5. Dispositif selon l'une des revendications 1 à 3, caractérisé en ce que les couples de valeurs de recherche (r,e) sont générés l'un après l'autre, en considérant les résulats obtenus dans le calcul de l'énergie d'erreur Err(r,e) et en choisissant chaque valeur à partir des valeurs précédentes dans le sens où cette énergie d'erreur décroît.

6. Dispositif selon l'une des revendications 1 à 5, caractérisé en ce qu'il comprend en outre, pour chaque image à traiter :
   - des moyens (60) pour générer une distribution circularisée de points mko, dans l'espace dit dilaté, par l'application sur chaque points Mk de la distribution elliptique dicrétisée (100) d'origine, de l'homothétie directe H définie par :
     . son centre Ω, approximativement fixé au centre de l'ellipse (100),
     . son axe, parallèle au petit axe de l'ellipse (100),
     . son rapport, égal à l'ellipticité Eo nouvellement calculée, sélectionnée par les moyens de calcul (4, 5, 11) ;
   - et des moyens de calcul (70), pour calculer, par rapport audit centre approximatif Ω, et à partir de la valeur du rayon Ro nouvellement sélectionnée par les moyens (4, 5, 11), la position recherchée (Xo, Yo) du centre Oo optimisé de la distribution de poins Mk d'origine.

7. Dispositif du type dit senseur de Terre, pour être embarqué sur un engin spatial et pour déterminer l'orientation de cet engin spatial vis-à-vis de l'axe centre de la Terre-senseur, ce senseur comprenant un dispositif de traitement d'image dit extracteur, pour extraire les points Mk relatifs au contour de la Terre à partir d'une image du disque terrestre sur fond d'espace sidéral, constituée de pixels repérés par leurs coordonnées dans un plan discrétisé, et ce senseur comprenant en outre un dispositif du type dit identificateur conforme au dispositif selon l'une des revendications 1 à 6.

14

FIG.1

FIG.2

FIG.5

EP 0 605 027 A1

FIG. 3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | COMPUTER VISION, GRAPHICS, AND IMAGE PROCESSING, ACADEMIC PRESS INC. vol. 45, no. 3 , March 1989 , DULUTH, MN, US pages 362 - 370 XP000054688 S.M.THOMAS ET AL 'A SIMPLE APPROACH FOR THE ESTIMATION OF CIRCULAR ARC CENTER AND ITS RADIUS' * the whole document * | 1-7 | G06F15/70 G01S3/786 B64G1/36 G06F15/353 |
| A | US-A-4 288 852 (S.W.HOLLAND) 8 September 1981 * column 5, line 30 - column 7, line 7 * | 1 | |
| D,A | EP-A-0 405 678 (SOCIETE ANONYME D'ETUDES ET REALISATIONS NUCLEAIRES - SODERN, FR) 2 January 1991 * the whole document * | 1-7 | |

TECHNICAL FIELDS
SEARCHED     (Int.Cl.5)

G06F
G01S
B64G

The present search report has been drawn up for all claims

| Place of search | Date of completion of the search | Examiner |
|---|---|---|
| THE HAGUE | 23 December  1993 | Barba, M |

EPO FORM 1503 03.82 (P04C01)